# EUROPEAN PATENT APPLICATION

(11) **EP 2 249 100 A1**
(43) Date of publication of application: **10.11.2010**
(21) Application number: 09382066.0
(22) Date of filing: 08.05.2009
(51) Int. Cl.: F24J 2/10, F24J 2/46

(54) **Device and method for protecting solar reflectors**

(71) Applicant: Rioglass Solar, S.A., 33612 Santa Cruz de Mieres - Asturias (ES)
(72) Inventor: García-Conde Noriega, Ignacio, 33612, Santa Cruz de Mieres - Asturias (ES); Ubach Cartategui, Josep, 33612, Santa Cruz de Mieres - Asturias (ES)
(74) Representative: ABG Patentes, S.L.

(57) **Abstract**

The present invention relates to a protection for reflective mirrors of solar energy concentrators. The protection comprises a peripheral cord (8) which extends along the edge of the reflector (9) covering the peripheral area of the reflective layer (2) on the edge of the reflector (9). Preferably, the peripheral cord (8) is made substantially of an elastomer (silicone) polymer and adheres to at least the edge of the reflector (9) to protect it from corrosion and blows. It additionally defines a method to protect a reflector (9) against corrosion and blows by means of the extrusion of a peripheral cord (8) on the edge of a reflector (9).

## Description

### TECHNICAL FIELD OF THE INVENTION

The present invention relates to a protection against corrosion and impacts for reflective mirrors of solar energy concentrators. The protection is particularly applied on the edge area of the reflective mirrors.

### BACKGROUND OF THE INVENTION

The electricity generation systems by concentrating solar thermal energy use reflective mirrors of different geometries as one of their basic elements, such as those which have a flat, cylindrical parabolic or spherical parabolic surface, according to the technology to which they are applied, amongst these being the concentration tower, tube concentration or concentration by using Sterling motor technology.

The reflective surface is achieved by means of a metal layer placed on one of the faces of a rigid substrate. This rigid substrate tends to be of metal or glass. Furthermore, both in direct reflectors, wherein the radiation falls directly on the reflective surface, and in those of the mirror type, wherein the radiation passes through a substrate support before falling on the reflective surface, a plurality of protective layers are placed on these reflective surfaces to protect these reflective surfaces.

The aforementioned protective layers which are deposited during the manufacturing process of the mirrors and used as solar reflectors are essentially made considering the following sequential steps; application of at least one silver reflective layer, followed by the application on the silver of a copper layer which protects the previous one and the application of a plurality of protective layers of paint with a thickness of micrometres on the copper layer.

Once the manufacturing process thereof has been completed, a common aspect of these reflectors is that the metal reflective layers borders, which determine a peripheral area on the edge of the reflective mirror, are permanently exposed to the environment or external atmosphere. In the peripheral area exposed to the environment an oxidation process is begun towards the interior of the reflector which has fatal consequences for the reflective layer, as the corrosion which is initiated on the edge of the reflector spreads towards the inside of the reflector, diminishing the reflective properties of the reflective layer and reducing the operative reflective surface.

These reflectors are mounted on metal structures installed in the open air in places with a large amount of sunshine. Bearing in mind that they are normally installed in desert areas with high temperature gradients over the course of a day, the environmental conditions favour the appearance of water due to condensation of the atmospheric humidity. Therefore, the probability is considerably high that corrosive processes begin on the edge of the metal layers in the mid-long term, which in time, spread towards the interior of the reflectors and produce corrosive phenomena such as those previously described, with the consequent reduction of the useful reflective surface.

This phenomenon is completely independent from the size and geometry of the reflector, as the capacity of peripheral corrosion of its reflecting layer and its subsequent penetration towards the interior of the surface of the collector basically depend on the intrinsic oxidation capacity of the material of the reflective layers, on the atmospheric conditions of the location of the reflectors and on the quality of the application process and the protection of the reflective layers on the substrate support.

The protection against oxidation of the metal layers which is performed on the solar reflectors with deposition of metal layers is generally based on the application of the described protective coating on the reflective layer, whether it is on the solar radiation incidence face or on the opposite face. In a mirror type reflector with the metal layer applied on the face of the substrate opposite the solar radiation, the protective coating is normally made up of a copper layer and at least one additional layer of paint. The peripheral area defined by the metal layer border on the edge of the reflector exposed to the open air and under risk of initiation and spreading of corrosion is maintained with this type of protection based on successive depositions of layers.

Attempts have been made to reduce the risk of oxidation of the silver layer with chemical treatments, U.S. Pat. No. 5.296.297, but with the same philosophy of protection based on surface deposition of layers and without any type of protection against the peripheral area.

Protections have also been proposed by means of the application of layers of paint on the edge of the reflective mirror. These layers of paint are exposed to various problems during their handling and transport which could lead to damage on the reflector, and also, to the damages that could be caused on the protective layer itself. This damage helps the oxidizing agents access the reflective layers and can accelerate the diminishing of the performance of the reflector.

Furthermore, the application of a layer of paint generally requires a level of finish of the edge of the reflector capable of providing clean surfaces which result in a correct adhesion of the protective layer. These processes on the edges of a reflector imply the use of machinery which permits the achievement of the previous requirements in reflectors with curved shapes such as paraboloids and such like which results in a substantial increase of costs.

### SUMMARY OF THE INVENTION

The object of the present invention is to resolve the protection of the reflective layer of a solar reflector and particularly to prevent the initiation and penetration of corrosive processes of the reflective layer which begin on the edges of a solar reflective mirror and the protection of the edges of these reflective mirrors against blows and impacts which they could suffer in the manufacturing, packaging, transport and assembly processes.

These and other drawbacks are resolved in the present invention by means of a protection for solar reflectors according to the independent claim 1, a solar reflector according to the independent claim 6, and a method of protection for a solar reflector according to the independent claim 14. Additionally, other aspects of the inventions and particularly advantageous embodiments thereof are defined in the dependent claims.

In a first inventive aspect the invention features a protection against corrosion and impacts for concentrators of solar energy reflectors which comprises a peripheral cord which covers at least the peripheral area of the reflective layer on the edge of the reflector, the cord being of a thickness such that it substantially protrudes from the edge of the reflector, and is adhered to the peripheral cord at least at part of the adhesive area of the reflector.

In the context of the present invention, adhesive area of the reflector is understood as any part of the edge of the reflector and/or any area or areas of the surfaces next to the edge, which permit the peripheral cord to be able to cover the peripheral area of the reflective layer on the edge of the reflector guaranteeing the sealing against penetration of the external corrosive agents. Consequently, the peripheral cord can be adhered to any area of the edge, to any area or areas of the incidence face, to any area or areas of the face opposite that of the incidence face, or to any combination of the previous elements.

The protection of the invention protects the edges of the reflectors around their perimeter by means of an elastic product with a great capacity of adhesion and stability against the atmospheric agents (solar radiation, humidity, dust, variations in temperature) which also permits the absorption of impacts, thus protecting the mirror against accidental breakages in the processes of with a lot of handling, such as the packaging, transport and assembly in the support structures, especially in the case of sea transport of the reflectors.

The cord covers at least the peripheral area defined by the border of the metal layer on the edge of the reflector, exposed to the exterior atmosphere, where the corrosive processes begin. The size of the section or thickness of the peripheral cord is such that it protrudes from the edge of the reflector so that it provides a contact surface against impacts and/or corrosive agents which could affect at least the peripheral area providing protection against these aggressions. Advantageously, the cord can protrude only on the surface of the edge, on the surface of the edge and part of the incidence face, on the surface of the edge and part of the face opposite that of incidence or on the three aforementioned surfaces.

In a preferred embodiment the covered surface is substantially greater than that which occupies the peripheral area defined by the border of the metal layer on the edge of the reflector optimizing the adhesion of the peripheral cord to the substrate.

The material wherefrom the cord is manufactured is substantially an elastomer, making this cord a shock absorber element for the blows and impacts which the edge of the reflector might suffer during the handling thereof. Nevertheless, with the object of preserving the reflective surface as much as possible, the peripheral cord invades a region whose maximum width *w* is of 5 mm on the surface of the radiation incidence face, measured from the unedged area.

In one example of embodiment, the elastomer used is substantially a silicone polymer. These synthetic polymers derived from silicon require an amount of energy which is much greater than that necessary to destroy the links of the organic polymers featuring the following advantages with respect to other elastomers:
- Stability in a wide range of temperatures from approximately -50°C to 200°C;
- Stability against chemical attacks such as acid rain and/or contaminating substances in the atmosphere;
- Substantially constant mechanical properties in a wide range of temperatures, such as those which are reached in desert environments;
- Resistance to shearing and grating;
- Durability against solar radiation, especially resistant to the UV region of the spectrum;
- High adhesion to the substrate;
- Low flammability;
- High degree of buffering and flexibility;
furthermore being compatible with an extrusion manufacturing process.

As the silicones are elastomers polymers which are susceptible to extrusion and feature excellent characteristics of adhesion to the substrate, the surfaces of the edges of the reflector do not need the specific care relating to the typical polish and/or preparation when an adhesive of any class is applied on a surface, while they permit the production of a smooth and even surface. This solution results in a substantial decrease in the costs as it does not require the edges of the reflector to undergo a specific polishing procedure. On the other hand, application by means of extrusion of the cord can be carried out by means of high productivity and low cost processes, additionally permitting storage in excellent conditions, which is especially critical in the transportation processes.

The previously mentioned characteristics lend a great durability to the applications with silicone maintaining optimal service conditions, of greater than 20 years, which makes them an ideal material for long-term protection to corrosion of the metal layers of the solar reflectors even in extreme environments.

The tests performed in a saline chamber with samples of mirror protected by peripheral cord remain completely unaltered to this corrosive phenomenon in tests which last more than 600 hours, against those samples characterized by the application of four protective layers (one of copper and three of paint) without peripheral cord, where the corrosive process has just started and spreads towards the interior of a mirror type reflector.

Although the invention functions for any type of reflector, i.e., any substrate equipped with metal layers which allow for reflection, it is especially intended for those reflectors used in the technology of electrical energy generation by solar concentration, whatever the geometry thereof may be: flat, cylindrical, parabolic, cylindrical parabolic, spherical or spherical parabolic.

In a second inventive aspect a reflector is presented for solar energy concentrators which comprises a rigid substrate, a reflective layer, a plurality of protective layers applied on the reflective layer, and a protection against corrosion and impacts according to the first inventive aspect.

In a third inventive aspect a method is presented to protect a reflector for solar energy concentrators against corrosion and impacts which comprises the following steps:
■ having a reflector which comprises a reflective surface; and
■ applying a protection according to the first inventive aspect around the peripheral area of the reflective layer on the edge of the reflector.

### BRIEF DESCRIPTION OF THE FIGURES

For a better understanding of the invention, the objects and advantages thereof, the following figures are attached to the specification wherein the following is represented:
- fig. 1: shows a perspective view of a reflector provided with a protection according to a preferred embodiment of the invention;
- fig. 2: shows a cut of the cross-section of a reflector provided with a protection according to a preferred embodiment of the invention; and
- fig. 3: shows cross-sectional views of different examples of embodiment of the protection of the invention;

### EMBODIMENTS OF THE INVENTION

Below, variants of embodiment of the peripheral cord to apply to a reflective mirror such as those used in solar energy plants are detailed.

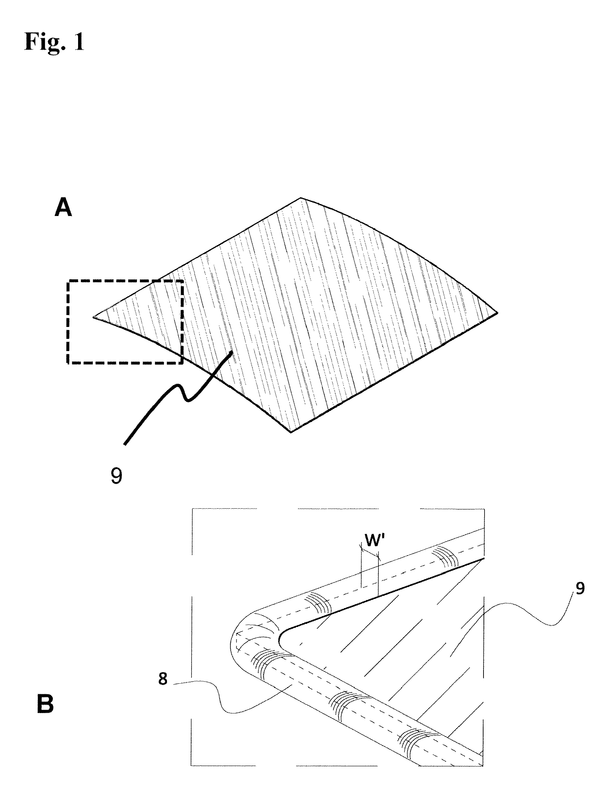

Figure 1 shows a reflective unit which comprises a reflective mirror 9 equipped with a peripheral cord 8. In this example of embodiment, the peripheral cord 8 extends around the edge of the reflector. As can be observed in the close-up, in this example of embodiment the peripheral cord 8 covers the entire edge extending to a distance *w* on the incidence face of the reflector.

In one example of embodiment, the peripheral cord 8 features a cross sectional thickness of between approximately 1 and 1.5 mm and a developed cross-sectional length of between 11-12 mm for a glass of 4 mm of thickness, which is an approximate cross section of around 10 mm².

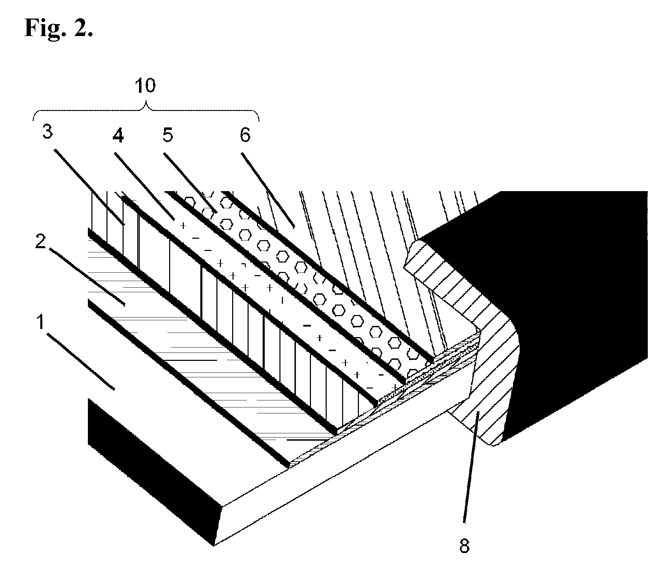

The structure of the layers of the reflective mirrors 9 of a preferred embodiment of the invention is shown in figure 2. The reflection is produced thanks to the metal layer 2 placed on one of the two faces of a rigid substrate 1, preferably generally of glass, with the geometric shape of the reflector. These mirrors comprise at least one reflective layer 2, preferably of silver, whereon is found a plurality of protective layers 10. Preferably, in one example of embodiment the silver layer of metal reflective 2 features a thickness such that the minimum surface density is approximately 0.7 g/m².

On the face of the reflective layer 2 opposite the solar radiation incidence face is placed a plurality of protective layers 10, as shown in figure 2.

Preferably, in one example of embodiment the plurality of protective layers 10 comprises one copper layer 3 and three layers of paint 4, 5, 6.

Preferably, in one example of embodiment the copper layer 3 features a thickness such that the minimum surface density is approximately 0.3 g/m².

Preferably, in one example of embodiment the first of the three layers of paint or "base coating" paint 4 applied by means of a curtain coater followed by the corresponding infrared curing furnace and an air cooling tunnel to reduce the temperature of the glass before the following step. In one example of embodiment the thickness of the dry film for the base coating is approximately of between 20 and 45 micrometres.

Preferably, the second layer of paint or "intermediate coating" paint 5 is also applied in a curtain coater followed by the corresponding infrared curing furnace and an air cooling tunnel. In one example of embodiment the thickness of the dry film for the intermediate coating is approximately of between 25 and 55 micrometres.

Preferably, the third layer of paint or "outer coating" paint 6 is applied in a curtain coater followed by the corresponding infrared curing furnace and an air cooling tunnel. In one example of embodiment the thickness of the dry film for the outer coating is approximately of between 25 and 55 micrometres.

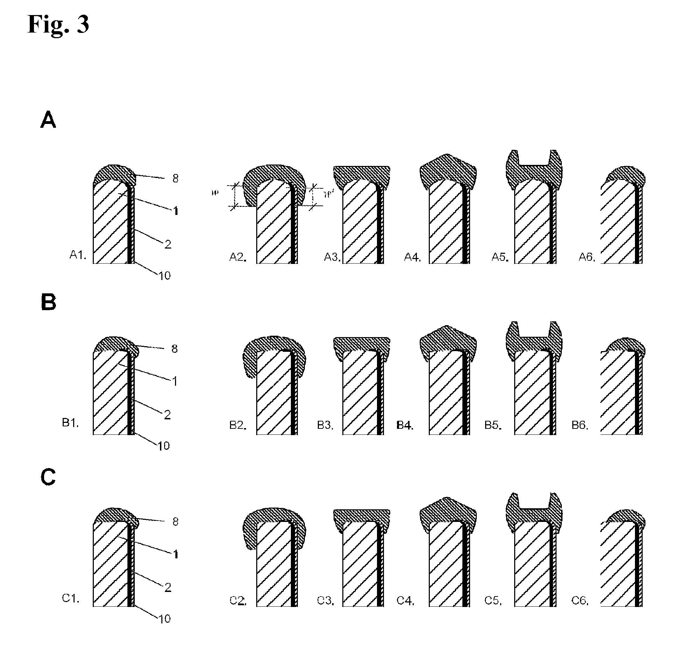

In figure 3 various examples of embodiment of this peripheral cord 8 can be observed for a C-shaped edge (A) a semi C-shaped edge (B) and a flat edge (C). In the various examples of embodiment it can be observed that the thickness of the peripheral cord 8 allows for the protection of the area of the edge in any of its embodiments, being substantially thicker than a layer of paint in order to provide protection against the aforementioned impacts. In the examples of embodiment A1, B1 and C1, the peripheral cord 8 substantially covers the peripheral area defined by the edge of the metal layer 2 on the edge of the reflector 9.

In the examples of embodiment A2, B2 and C2 of figure 3, the peripheral cord 8 features a curved cross-section extending on the incidence face a width *w* and on the painted face a width *w'.*

In the examples of embodiment A3, B3 and C3 of figure 3, the peripheral cord 8 features a straight cross-section.

In the examples of embodiment A4, B4 and C4 of figure 3, the peripheral cord 8 features a pseudo-pentagonal cross-section.

In the examples of embodiment A5, B5 and C5 of figure 3, the peripheral cord 8 features an H-shaped cross-section.

Lastly, in the examples of embodiment A6, B6 and C6 of figure 3, the peripheral cord 8 features a curved cross-section and covers the edge slightly expanding on the painted face.

In a second aspect a method for protecting a reflective mirror 9 is defined whereto a peripheral cord 8 is provided.

In a preferred embodiment, the peripheral cord 8 is made by extrusion of a silicone polymer on the edge of the reflective mirror 9. The extrusion of this cord covers at least the part of the edge where the border of the reflective layer 2 is found, resulting in a unit which comprises a reflective mirror and a peripheral cord.

In one example of embodiment, said extrusion is carried out once all of the layers which make up the reflector 9 have been placed, after a final washing with demineralised water, to eliminate any contamination caused during the process on the radiation incidence face, and a drying by air to eliminate the humidity of the previous washing step.

### Tests

In order to illustrate the problem of oxidation and corrosion of the metal layers, accelerated corrosion tests have been performed in saline chambers with standard and other specific procedures on samples of mirrored glass.

These tests show peripheral corrosion of an intensity level, which while the temperature and saline solution concentration remain constant and homogenous inside the chamber, they basically depend on the exposition time of the samples in the salt fog chamber.

*Test 1*. Resistance to corrosion in acidic saline chamber according to ISO regulation 9227:2006 CASS (*Copper Acid Salt Spray*). The test was carried out in a Dycometal SSC-400 chamber.

The presence of incipient corrosion was detected during this test for the samples without peripheral cord when the exposition time exceeds 120 hours. Specific corrosion is observed on edges of the sample without peripheral cord CP4b.10 after 386 hours which progressively increases. At 818 h corrosion is observed along the edge of the sample without peripheral cord CP4b.10 with specific areas of penetration up to 1.1 mm.

On the other hand, there are no effects of corrosion or initiation thereof shown on the reflectors protected by means of a peripheral cord according to the preferred embodiment of the invention once 818 h of Test 1 have passed.

*Test 2.* Accelerated CASS corrosion test (532 hours) on the sample with peripheral cord CP4b.4, and on the sample without peripheral cord CP4b.9 and CP4b.10. This specific accelerated corrosion test designed by the inventors is carried out by total immersion of the samples in a solution of pH 1 prepared from 1 litre of solution used in CASS and 10 ml of concentrated chlorhydric acid.

The sample with peripheral cord CP4b.5 does not present signs of corrosion on edges or close to them at the end of 532 h or Test 2. The samples CP4b.9 and CP4b.10 without peripheral cord present clear signs of homogeneous corrosion (of between 0.2-0.3 mm of penetration) after 96 hours of testing have passed and up to 1mm of penetration at the end of 532 hours of testing.

| **Id.** | **Peripheral Cord** | **Test 1** | | **Test 2** | |
|---|---|---|---|---|---|
| | | **Signs of corrosion** | **Duration** **(hours)** | **Signs of** **corrosion** | **Duration** **(hours)** |
| **CP4b.1** | Yes | No | 818 | - | - |
| **CP4b.2** | Yes | No | 818 | - | - |
| **CP4b.3** | Yes | No | 818 | - | - |
| **CP4b.4** | Yes | No | 818 | - | - |
| **CP4b.5** | Yes | No | 818 | No | 532 |
| **CP4b.6** | Yes | No | 818 | - | - |
| **CP4b.7** | Yes | No | 818 | - | - |
| **CP4b.8** | No | Yes | 818 | - | - |
| **CP4b.9** | No | Yes | 818 | Yes | 532 |
| **CP4b.10** | No | Yes | 818 | Yes | 532 |

## Claims

1. Protection against corrosion and impacts for reflectors (9) of solar energy concentrators which comprises a peripheral cord (8) which covers at least the peripheral area of the reflective layer on the edge of the reflector, the peripheral cord (8) being of a thickness such that it substantially protrudes from the edge of the reflector, and the peripheral cord (8) being adhered, at least, to a part of the adhesive area of the reflector (9).

2. Protection according to claim 1 wherein the peripheral cord (8) is made substantially from an elastomer polymer.

3. Protection according to claim 2 wherein the peripheral cord (8) is made substantially from a silicone polymer.

4. Protection according to any of the previous claims wherein the peripheral cord (8) covers at least all of the edge of the reflector (9).

5. Protection according to any of the previous claims wherein the peripheral cord (8) extends over the reflective surface to an approximate distance of less than or equal to 5 mm.

6. Reflector for solar energy concentrators which comprises:
- A rigid substrate (1);
- A reflective layer (2);
- A plurality of protective layers (10), and
- A protection against corrosion and impacts according to any of the previous claims 1 to 5.

7. Reflector according to claim 6 wherein the reflective layer (2) is made of silver of a thickness such that the minimum surface density is approximately 0.7 g/m².

8. Reflector according to claims 6 or 7 wherein the plurality of protective layers (10) comprises a copper layer (3).

9. Reflector according to claim 8 wherein the thickness of the copper layer (3) is such that the minimum surface density is 0.3 g/m².

10. Reflector according to any of claims 6 to 8 wherein the plurality of protective layers (10) comprises a first layer of paint (4).

11. Reflector according to any of claims 6 to 10 wherein the plurality of protective layers (10) comprises a second layer of paint (4).

12. Reflector according to any of claims 6 to 11 wherein the plurality of protective layers (10) comprises a third layer of paint (4).

13. Reflector according to any of claims 10 to 12 wherein the thickness of any of the layers of paint (4, 5, 6) is of approximately between 20 and 45 micrometres.

14. Method to protect a reflector for solar energy concentrators against corrosion and impacts which comprises the following steps:
- disposition of a reflector (9) which comprises a reflective surface (2);
and
- application of a protection against any of the claims 1 to 5 around the peripheral area of the reflective layer on the edge of the reflector (9).

15. Method according to claim 14 wherein the application of the protection comprises the extrusion of a peripheral cord (8) on the edge of a reflecting mirror.
